# EUROPEAN PATENT APPLICATION

(11) **EP 4 366 361 A1**
(43) Date of publication of application: **08.05.2024**
(21) Application number: 22831845.7
(22) Date of filing: 23.06.2022
(51) Int. Cl.: H04W 24/02, H04W 24/10

(54) **COMMUNICATION AND SENSING METHOD, APPARATUS, AND NETWORK DEVICE**

(30) Priority: 28.06.2021 CN 202110720745
(71) Applicant: Vivo Mobile Communication Co., Ltd., Dongguan, Guangdong 523863 (CN)
(72) Inventor: JIANG, Dajie, Dongguan, Guangdong 523863 (CN); YAO, Jian, Dongguan, Guangdong 523863 (CN)
(74) Representative: Lavoix
(86) International application number: PCT/CN2022/100788
(87) International publication number: WO 2023/274029

(57) **Abstract**

This application discloses a communication sensing method and apparatus, and a network device, relating to the field of communication technologies. The method of embodiments of this application includes: A first device performs a first operation in a case that a preset condition is satisfied. The first operation includes one of the following: detecting a first signal; sending a measurement quantity related to the first signal; detecting the first signal and sending the measurement quantity related to the first signal; and sending the first signal, where the first signal is a signal used for sensing. The preset condition includes at least one of the following: signal quality of a first target signal satisfies a first condition; a first indicator corresponding to a second target signal satisfies a second condition, where the first indicator is an indicator related to quality of a sensing signal; a sensing result associated with a third target signal satisfies a third condition, where the third target signal is a signal used for sensing; and a sensing-related measurement quantity associated with a fourth target signal satisfies a fourth condition, where the fourth target signal is a signal used for sensing.

## Description

### CROSS-REFERENCE TO RELATED APPLICATIONS

This application claims priority to Chinese Patent Application No. 202110720745.5, filed in China on June 28, 2021, which is incorporated herein by reference in its entirety.

### TECHNICAL FIELD

The present disclosure relates to the field of communication technologies, and in particular, to a communication sensing method and apparatus, and a network device.

### BACKGROUND

In related technologies, a base station sends a sensing signal, and a user terminal (User Equipment, UE) receives the sensing signal and detects people flow or traffic conditions within a coverage range of the base station through the sensing signal. Assuming that the people flow condition within the coverage range of the base station needs to be obtained, a plurality of UEs in corresponding areas may measure sensing signals sent by the base station and send feedback quantities to the base station.

However, channel conditions or signal quality of UEs accessing the base station are not the same. If UEs having poor channel conditions detect sensing signals and feeds back corresponding measurement quantities, reliability or accuracy of these measurement quantities cannot be ensured. If the base station finally uses these measurements, final overall sensing performance is affected.

### SUMMARY

Embodiments of this application provide a communication sensing method and apparatus, and a network device, which can solve the problem in related technologies that it is difficult to ensure reliability or accuracy of measurement quantities fed back by terminals.

According to a first aspect, a communication sensing method is provided, including:

A first device performs a first operation in a case that a preset condition is satisfied.

The first operation includes one of the following:
detecting a first signal;
sending a measurement quantity related to the first signal;
detecting the first signal and sending the measurement quantity related to the first signal; and
sending the first signal, where
the first signal is a signal used for sensing.

The preset condition includes at least one of the following:
signal quality of a first target signal satisfies a first condition;
a first indicator corresponding to a second target signal satisfies a second condition, where the first indicator is an indicator related to quality of a sensing signal;
a sensing result associated with a third target signal satisfies a third condition, where the third target signal is a signal used for sensing; and
a sensing-related measurement quantity associated with a fourth target signal satisfies a fourth condition, where the fourth target signal is a signal used for sensing.

According to a second aspect, a communication sensing method is provided, including:

A second device sends first information, where the first information indicates a preset condition; or
the second device sends second information, where the second information indicates a first sensing requirement.

The first sensing requirement is associated with at least one of the following:
the preset condition;
a source or format of a sensing signal;
a measurement quantity or a reporting quantity; and
a resource used for reporting the measurement quantity.

The preset condition includes at least one of the following:
signal quality of a first target signal satisfies a first condition;
a first indicator corresponding to a second target signal satisfies a second condition, where the first indicator is an indicator related to quality of the sensing signal;
a sensing result associated with a third target signal satisfies a third condition, where the third target signal is a signal used for sensing; and
a sensing-related measurement quantity associated with a fourth target signal satisfies a fourth condition, where the fourth target signal is a signal used for sensing.

According to a third aspect, a communication sensing apparatus is provided, including:
a first processing module, configured to perform a first operation in a case that a preset condition is satisfied.

The first operation includes one of the following:
detecting a first signal;
sending a measurement quantity related to the first signal;
detecting the first signal and sending the measurement quantity related to the first signal; and
sending the first signal, where
the first signal is a signal used for sensing.

The preset condition includes at least one of the following:
signal quality of a first target signal satisfies a first condition;
a first indicator corresponding to a second target signal satisfies a second condition, where the first indicator is an indicator related to quality of a sensing signal;
a sensing result associated with a third target signal satisfies a third condition, where the third target signal is a signal used for sensing; and
a sensing-related measurement quantity associated with a fourth target signal satisfies a fourth condition, where the fourth target signal is a signal used for sensing.

According to a fourth aspect, a communication sensing apparatus is provided, including:
a first transmission module, configured to send first information, where the first information indicates a preset condition, or
the first transmission module, configured to send second information, where the second information indicates a first sensing requirement.

The first sensing requirement is associated with at least one of the following:
the preset condition;
a source or format of a sensing signal;
a measurement quantity or a reporting quantity; and
a resource used for reporting the measurement quantity.

The preset condition includes at least one of the following:
signal quality of a first target signal satisfies a first condition;
a first indicator corresponding to a second target signal satisfies a second condition, where the first indicator is an indicator related to quality of the sensing signal;
a sensing result associated with a third target signal satisfies a third condition, where the third target signal is a signal used for sensing; and
a sensing-related measurement quantity associated with a fourth target signal satisfies a fourth condition, where the fourth target signal is a signal used for sensing.

According to a fifth aspect, a network device is provided. The network device includes a processor, a memory, and a program or instructions stored on the memory and capable of running on the processor. When the program or the instructions are executed by the processor, the steps of the method according to the first aspect or the second aspect are implemented.

According to a sixth aspect, a network device is provided, including a processor and a communication interface. The processor is configured to perform a first operation in a case that a preset condition is satisfied. The first operation includes one of the following:
detecting a first signal;
sending a measurement quantity related to the first signal;
detecting the first signal and sending the measurement quantity related to the first signal; and
sending the first signal, where
the first signal is a signal used for sensing.

The preset condition includes at least one of the following:
signal quality of a first target signal satisfies a first condition;
a first indicator corresponding to a second target signal satisfies a second condition, where the first indicator is an indicator related to quality of a sensing signal;
a sensing result associated with a third target signal satisfies a third condition, where the third target signal is a signal used for sensing; and
a sensing-related measurement quantity associated with a fourth target signal satisfies a fourth condition, where the fourth target signal is a signal used for sensing.

According to a seventh aspect, a network device is provided, including a processor and a communication interface. The communication interface is configured to send first information or second information, where the first information indicates a preset condition. A first sensing requirement is associated with at least one of the following:
the preset condition;
a source or format of a sensing signal;
a measurement quantity or a reporting quantity; and
a resource used for reporting the measurement quantity.

The preset condition includes at least one of the following:
signal quality of a first target signal satisfies a first condition;
a first indicator corresponding to a second target signal satisfies a second condition, where the first indicator is an indicator related to quality of the sensing signal;
a sensing result associated with a third target signal satisfies a third condition, where the third target signal is a signal used for sensing; and
a sensing-related measurement quantity associated with a fourth target signal satisfies a fourth condition, where the fourth target signal is a signal used for sensing.

According to an eighth aspect, a readable storage medium is provided. The readable storage medium stores a program or the instructions are executed by a processor, the steps of the method according to the first aspect are implemented, or the steps of the method according to the second aspect are implemented.

According to a ninth aspect, a chip is provided. The chip includes a processor and a communication interface. The communication interface is coupled to the processor. The processor is configured to run a program or instructions to implement the method according to the first aspect, or implement the method according to the second aspect.

According to a tenth aspect, a computer program/program product is provided. The computer program/program product is stored in a storage medium. The computer program/program product is executed by at least one processor to implement the steps of the method according to the first aspect or the second aspect.

In embodiments of this application, a first device that satisfies a preset condition performs a first operation, to prevent a communication device that does not satisfy the preset condition from detecting a sensing signal or reporting a measurement quantity of the sensing signal, so that reliability or accuracy of the fed-back measurement quantity can be effectively ensured, thereby improving overall sensing performance.

### BRIEF DESCRIPTION OF THE DRAWINGS

FIG. 1 is a structural diagram of a communication system applicable to an embodiment of this application;
FIG. 2 is a first schematic flowchart of a communication sensing method according to an embodiment of this application;
FIG. 3 is a second schematic flowchart of a communication sensing method according to an embodiment of this application;
FIG. 4 is a first schematic module diagram of a communication sensing apparatus according to an embodiment of this application;
FIG. 5 is a second schematic module diagram of a communication sensing apparatus according to an embodiment of this application;
FIG. 6 is a structural block diagram of a communication device according to an embodiment of this application;
FIG. 7 is a structural block diagram of a terminal according to an embodiment of this application; and
FIG. 8 is a structural block diagram of a network side device according to an embodiment of this application.

### DETAILED DESCRIPTION

The technical solutions in embodiments of this application are clearly described in the following with reference to the accompanying drawings in embodiments of this application. Apparently, the described embodiments are some rather than all of embodiments of this application. Based on embodiments of this application, all other embodiments obtained by a person of ordinary skill in the art fall within the scope of protection of this application.

The terms such as "first" and "second" in the specification and claims of this application are used to distinguish similar objects, but not used to describe a specific order or sequence. It should be understood that the terms used in such a manner are interchangeable in a proper case, so that embodiments of this application can be implemented in an order other than those shown or described herein. Moreover, the objects distinguished by the "first" and "second" usually belong to one type, and the number of objects is not limited, for example, there may be one or more first objects. Furthermore, "and/or" used in the specification and claims means at least one of connected objects, and the character "/" generally means that contextually associated objects are in an "or" relationship.

It should be noted that the technologies described in embodiments of this application are not limited to a long term evolution (Long Term Evolution, LTE)/LTE-advanced (LTE-Advanced, LTE-A) system, and may also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in embodiments of this application are often used interchangeably, and the described technologies may be used for the above-mentioned systems and radio technologies, and may also be used for other systems and radio technologies. The following describes a new radio (New Radio, NR) system for the purpose of giving an example, and the term NR is used in most of the following descriptions. These technologies may also be applied to applications other than NR system applications, such as 6^{th} generation (6^{th} Generation, 6G) communication systems.

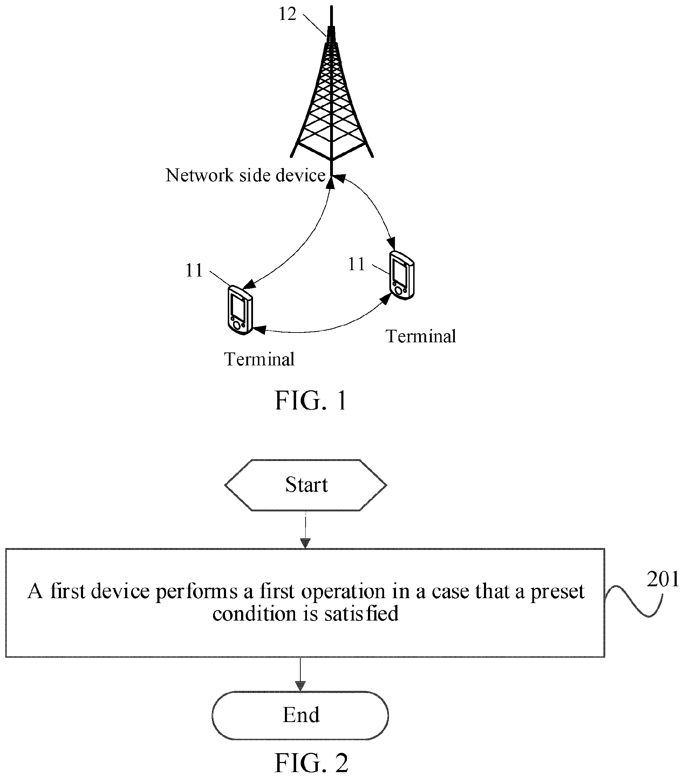

FIG. 1 is a structural diagram of a wireless communication system applicable to an embodiment of this application. The wireless communication system includes terminals 11 and a network side device 12. The terminals 11 may also be called terminal devices or user equipment (User Equipment, UE). The terminals 11 may be terminal side devices such as mobile phones, tablet computers (Tablet Computers), laptop computers (Laptop Computers) or notebook computers, personal digital assistants (Personal Digital Assistants, PDAs), palm computers, netbooks, ultra-mobile personal computers (ultra-mobile personal computers, UMPCs), mobile Internet devices (Mobile Internet Devices, MIDs), wearable devices (Wearable Devices) or vehicular user equipment (VUE), or pedestrian user equipment (PUE). The wearable devices include: smart watches, wristbands, earphones, glasses, or the like. It should be noted that the specific type of the terminals 11 is not limited in embodiments of this application. The network side device 12 may be a base station or a core network device, where a base station may be called a node B, an evolved node B, an access point, a base transceiver station (Base Transceiver Station, BTS), a radio base station, a radio transceiver, a basic service set (Basic Service Set, BSS), an extended service set (Extended Service Set, ESS), a B node, an evolved B node (eNB), a home B node, a home evolved B node, a wireless local area network (Wireless Local Area Network, WLAN) access point, a wireless fidelity (Wireless Fidelity, WiFi) node, a transmitting receiving point (Transmitting Receiving Point, TRP), or another particular suitable term in the field. As long as a same technical effect is achieved, the base station is not limited to a specific technical term. It should be noted that in embodiments of this application, only a base station in the NR system is taken as an example, and the specific type of the base station is not limited.

To enable a person skilled in the art to better understand embodiments of this application, the following description is provided first.

Future mobile communication systems such as a beyond 5^{th} generation (Beyond 5^{th} Generation, B5G) system or a 6G system also have sensing capabilities in addition to communication capabilities. For the sensing capability, one or more devices having sensing capabilities can sense information such as an orientation, a distance, and a speed of a target object, or detect, track, recognize, and image a target object, event or environment through sending and receiving of a wireless signal. In the future, with the deployment of small base stations such as millimeter-wave and terahertz base stations having high-band and large-bandwidth capabilities in a 6G network, sensing resolution is significantly improved compared with a centimeter-wave base station, so that the 6G network can provide a more refined sensing service.

Purposes of sensing are divided into two main types. In a first type of purpose, sensing is used for assisting communication or enhancing communication performance, for example, a base station provides more accurate beamforming and alignment device by tracking a movement trajectory of a device. The other type of purpose is sensing that is not directly related to communication, for example, a base station monitors a weather condition through a wireless signal, and a mobile phone user recognizes a gesture of a user through millimeter-wave wireless sensing.

Sensing modes may be divided into the following types:
(1) active sensing: A device uses a reflected signal of its own transmitted signal, such as an echo, for sensing, and transceivers are located at a same location and may sense surrounding environment information of the device using different antennas;
(2) passive sensing: Transceivers are located at different locations, and a receiver uses a wireless signal transmitted by a transmitter for sensing, for example, a base station A senses environment information between the base station A and a base station B by receiving a wireless signals from the base station B; and
(3) interactive sensing: A subject, a time, a frequency, a format, and the like of electromagnetic waves are agreed through information exchange between a sensor and a target object to complete a sensing process.

The communication sensing method provided in an embodiment of this application will be described in detail below in some embodiments and application scenarios thereof with reference to the accompanying drawings.

As shown in FIG. 2, an embodiment of this application provides a communication sensing method, including:
Step 201: A first device performs a first operation in a case that a preset condition is satisfied.
detecting a first signal;
sending a measurement quantity related to the first signal;
detecting the first signal and sending the measurement quantity related to the first signal; and
sending the first signal, where
the first signal is a signal used for sensing.

The preset condition includes at least one of the following:
signal quality of a first target signal satisfies a first condition;
a first indicator corresponding to a second target signal satisfies a second condition, where the first indicator is an indicator related to quality of a sensing signal;
a sensing result associated with a third target signal satisfies a third condition, where the third target signal is a signal used for sensing; and
a sensing-related measurement quantity associated with a fourth target signal satisfies a fourth condition, where the fourth target signal is a signal used for sensing.

In the embodiment of this application, the first signal may specifically be a signal used for obtaining information such as an orientation, a distance, and a speed of a target object, or a signal for detecting, tracking, recognizing, and imaging a target object, event or environment.

Optionally, In the embodiment of this application, the first operation is an operation related to a first sensing requirement. The first sensing requirement may specifically be a sensing requirement sent by a second device. Herein, the first sensing requirement may also be described as a first sensing purpose or a first sensing category.

In the embodiment of this application, the first device may also be described as a first communication device or a first sensing device, and the second device may also be described as a second communication device or a second sensing device.

The first device may be specifically a base station, a UE, a sidelink (sidelink) device, a sensing server, a sensing network element of a core network, or the like. The second device may specifically be a base station, a UE, a sidelink (sidelink) device, a sensing server, a sensing network element of a core network, a computing unit similar to a location management function (Location Management Function, LMF), or the like.

In the communication sensing method according to the embodiment of this application, a first device that satisfies a preset condition performs a first operation, to prevent a communication device that does not satisfy the preset condition from detecting a sensing signal or reporting a measurement quantity of the sensing signal, so that reliability or accuracy of the fed-back measurement quantity can be effectively ensured, thereby improving overall sensing performance.

Optionally, the method according to the embodiment of this application further includes:
determining the preset condition through an agreement or by receiving first information sent by the second device, where
the first information indicates the preset condition.

Optionally, the first information may contain the first sensing requirement.

In the embodiment of this application, the first device first determines the preset condition. Specifically, the preset condition may be determined through the agreement or the first information sent by the second device. That is, the preset condition is agreed, or is obtained from the first information.

The first information may be sent through broadcast signaling, system information block (System Information Block, SIB), radio resource control (Radio Resource Control, RRC) signaling, a media access control control element (Media Access Control Control Element, MAC CE), layer 1 signaling, or a data channel.

Optionally, the method according to the embodiment of this application further includes:
receiving second information sent by the second device, where the second information indicates the first sensing requirement.

The first sensing requirement is associated with at least one of the following:
the preset condition;
a source or format of the sensing signal;
the measurement quantity or a reporting quantity; and
a resource used for reporting the measurement quantity.

The second information may be sent through broadcast signaling, system information block (System Information Block, SIB), radio resource control (Radio Resource Control, RRC) signaling, media access control control element (MAC CE), layer 1 signaling, or a data channel.

Specifically, As shown in table 1, sensing requirements may be divided into several sensing categories, and each sensing category is associated with at least one of a preset condition, a resource or a format of a sensing signal, a measurement quantity or a reporting quantity, and a reporting resource. An association relationship may be agreed, or notified by a second device to a first device. If the second device has a sensing requirement, for example, the first device is required to perform measurement and feed back a measurement quantity related to environment reconstruction, the second device may indicate an index 1 through a broadcast message (such as an SIB). Optionally, the second device notifies the first device of a system information change through paging physical downlink control channel (Physical Downlink Control Channel, PDCCH) or physical downlink shared channel (Physical Downlink Shared Channel, PDSCH), and then the first device receives the paging PDCCH or read the SIB to obtain the sensing index 1, determines, depending on the a resource/format and a preset condition of a sensing signal associated with the sensing index 1, whether to detect the sensing signal, and feeds back the measurement quantity and/or send the sensing signal. The measurement quantity/reporting quantity and the reporting resource are also associated with the sensing index.

**Table 1**

| Sensing index | Sensing category | Preset condition | Source/format of a sensing signal | Measurement quantity/reporting quantity | Reporting resource |
|---|---|---|---|---|---|
| 1 | Environment reconstruction | Reference signal received power (Reference Signal Received Power, RSRP) is greater than -90 dBm; or A signal-to-clutter ratio is greater than or equal to 20 dB | Single-carrier frequency-division multiple access (Single-carrier Frequency-Division Multiple Access, SC-FDMA) waveform; and a corresponding parameter and time frequency resource, and the like | Target radar cross section (Radar Cross Section, RCS) information | Reporting time frequency resource and channel, and the like |
| 2 | Weather monitoring | A temperature is greater than 40 degrees Celsius, or humidity is greater than 50% | SC-FDMA and a corresponding parameter and time frequency resource, and the like | Channel state information (Channel State Information, CSI), and the like | Reporting time frequency resource and channel, and the like |
| 3 | PM2.5 monitoring | PM2.5 indicator is greater than 200 micrograms/cubic meter | Orthogonal frequency division multiplexing (Orthogonal Frequency Division Multiplexing, OFDM) and a corresponding parameter and time frequency resource, and the like | Channel state information | Reporting time frequency resource and channel, and the like |
| 4 | Traffic monitoring | Doppler shift is greater than 1 KHz or a ratio of Doppler shift to a carrier frequency is greater than 0.000001 | Orthogonal time frequency Space (Orthogonal Time Frequency Space, OTFS) and a corresponding parameter and time frequency resource, and the like | Doppler shift | Reporting time frequency resource and channel, and the like |
| 5 | People flow monitoring | A location belongs to a target area | OFDM and a corresponding parameter and time frequency resource, and the like | Channel state information | Reporting time frequency resource and channel, and the like |

Optionally, the signal quality is indicated by at least one of the following:
reference signal received power;
signal to interference plus noise ratio (Signal to Interference plus Noise Ratio, SINR);
signal-to-noise ratio (Signal-to-Noise Ratio, SNR);
a ratio of carrier signal strength to interference signal strength (Carrier-to-Interference Ratio, C/I); and
reference signal received quality (Reference Signal Received Quality, RSRQ).

There may be a plurality of first target signals. For example, the preset condition may specifically be that RSRP of a first target signal A sent by a serving cell is higher or lower than a particular threshold, and/or SINR of a first target signal B sent by a neighboring cell is higher or lower than a particular threshold.

Optionally, the first indicator includes at least one of the following:
a signal-to-clutter ratio;
sensing resolution or sensing resolution precision;
a signal side lobe characteristic; and
peak to average power ratio (Peak to Average Power Ratio, PAPR).

For example, the preset condition may be specifically whether signal-to-clutter ratio or signal-to-clutter-plus-noise ratio of the second target signal satisfies a third threshold, or whether a sensing resolution or resolution precision-related indicator of the second target signal satisfies a fourth threshold, or whether the signal side lobe characteristic satisfies a preset threshold, or whether the PAPR satisfies a preset threshold.

Optionally, the sensing result includes at least one of the following:
a location of a target object;
a distance of the target object;
a speed of the target object;
a detection result of the target object;
a tracking result of the target object;
a recognition result of the target object;
an imaging result of the target object;
humidity;
a temperature; and
air quality.

For example, the preset condition is that a location of the first device obtained by detecting the third target signal is within a target area, or the orientation, the distance, or the speed of the target object obtained by detecting the third target signal satisfies a preset threshold defined by the third condition, or the detection result, the tracking result, the recognition result, and the imaging result of the target object, event or environment obtained by detecting the third target signal satisfy specific requirements defined by the third condition (for example, imaging resolution of the imaging result satisfies a preset resolution requirement). Alternatively, the preset condition is that the humidity, the temperature, or the air quality (such as PM2.5) obtained by detecting a target signal satisfies a preset threshold defined by the third condition.

Optionally, the measurement quantity includes at least one of the following:
a first-type measurement quantity; and
a second-type measurement quantity.

The first-type measurement quantity includes at least one of the following:
a channel matrix (H);
channel state information;
power, a delay and/or angle information of each path in a multipath channel;
Doppler spread;
Doppler shift;
a phase difference between a first antenna and a second antenna; and
a delay difference between the first antenna and the second antenna.
The second-type measurement quantity includes at least one of the following:
feature information of a target object;
target event-related information; and
target environment-related information.

In the embodiment of this application, the feature information of the target object is information that can reflect an attribute or a state of the target object, and may be at least one of the following: a location of the target object, a speed of the target object, an acceleration of the target object, a material of the target object, a shape of the target object, a category of the target object, radar cross section of the target object, and the like.

The target event-related information is information related to the target event, that is, information that can be detected/sensed when the target event occurs, and may be at least one of the following: fall detection, intrusion detection, quantity statistics, indoor positioning, gesture recognition, lip recognition, gait recognition, expression recognition, breathing monitoring, heart rate monitoring, and the like.

The target environment-related information may be at least one of the following: humidity, brightness, a temperature and humidity, atmospheric pressure, air quality, a weather condition, topography, building/vegetation distribution, population statistics, crowd density, vehicle density, and the like.

Optionally, the measurement quantity may also include at least one of the following:
a location, a material, a shape and/or a category of a reflection point; and
radar spectrum information.

Optionally, the measurement quantity is a measurement quantity for each antenna or a measurement quantity for each sensing resource.

For example, the measurement quantity is a measurement quantity of each antenna (port) at a sending end or a receiving end, or the measurement quantity is a measurement quantity on each sensing resource, such as a measurement quantity of each resource block (Resource Block, RB), a subcarrier, or a RB group.

It should be noted that the first target signal or the second target signal may be at least one of the following:
a synchronization signal/physical broadcast channel block (Synchronization Signal and PBCH block, SSB), a demodulation reference signal (Demodulation Reference Signal, DMRS), a positioning reference signals (Positioning Reference Signal, PRS), a CSI reference signal (CSI Reference Signal, CSI -RS), and a tracking reference signal (Tracking Reference Signal, TRS).

Certainly, the first target signal or the second target signal may also be another signal.

The third target signal or the fourth target signal is a signal used for sensing, such as a signal for obtaining information such as the orientation, the distance, and the speed of the target object, or a signal for detecting, tracking, recognizing, and imaging the target object, event or environment. The third target signal or the fourth target signal may also be a signal for integrated sensing and communication, or a communication and sensing.

Any two of the first target signal, the second target signal, the third target signal, and the fourth target signal may be a same signal (that is, a signal for integrated sensing and communication) or different signals.

The first target signal, the second target signal, the third target signal, and the fourth target signal may be sent by the serving cell or by the neighboring cell.

The first target signal, the second target signal, the third target signal, and the fourth target signal may be sent by one or more cells (cells)/transmitter/receiver points (Transmitter/Receiver Points, TRPs).

Threshold values are defined according to protocols, or are obtained by the first device by receiving information sent by another device.

The target area is obtained by the first device by receiving information sent by another device. The target area may be an absolute location area or a relative location area.

Optionally, the first operation further includes:
reporting measurement information related to the preset condition.

For example, the preset condition is that the RSRP of the first target signal is greater than -90 dBm, the RSRP of the first target signal detected by the first device is -80 dBm, and then the first device reports that the RSRP of the first target signal is -80 dBm.

Optionally, the method according to the embodiment of this application further includes:
obtaining configuration information of the first signal.

The performing, by a first device, a first operation includes:

The first device performs the first operation based on the configuration information of the first signal.

The configuration information includes at least one of the following:
a waveform, for example, OFDM, single-carrier frequency-division multiple access (Single-carrier Frequency-Division Multiple Access, SC-FDMA), OTFS, frequency modulated continuous wave (Frequency Modulated Continuous Wave, FMCW), or a pulse signal.
a signal parameter;
signal transmission power, for example, a value taken every 2 dBm from -20 dBm to 23 dBm;
a signal format, for example, information such as a sounding reference signal (Sounding Reference Signal, SRS), a DMRS, a PRS, or another predefined signal, and a related sequence format;
a signal direction, for example, direction or beam information of the target signal;
a time resource, for example, an index of a slot where the target signal is located or an index of a symbol of the slot, where the time resource includes two types, where one type is a disposable time resource, for example, one symbol sends an omnidirectional first signal; and the other type is a non-disposable time resource, for example, multiple groups of periodic time resources or discontinuous time resources (which may contain a start time and an end time), where each group of periodic time resources sends a target signal in a same direction, and beam directions of different groups of periodic time resources are different;
a frequency resource, including a center frequency, a bandwidth, an RB, and/or a subcarrier of the target signal;
a quasi co-location (Quasi Co-Location, QCL) relationship, for example, the target signal includes a plurality of resources, each resource is in QCL with an SSB, and the QCL includes a type (Type) A, a type B, type C, or a type D; and
measurement quantity information, for example, it is indicated which measurement quantities of the target signal the UE needs to measure.

Further optionally, the signal parameter includes at least one of the following:
a subcarrier spacing, for example, a subcarrier spacing of an OFDM system is 30 KHz;
a guard interval, that is, a time interval from a moment when the sending of the signal ends to a moment when a latest echo signal of the signal is received, where the parameter is proportional to a maximum sensing distance; for example, it may be calculated through 2 dmax/c, where dmax is the maximum sensing distance, for example, for a sensing signal sent by self and received by self, dmax represents a maximum distance from a sensing signal transmitter/receiver point and to a signal transmitting point; in some cases, OFDM signal cyclic prefix (Cyclic Predix, CP) may function as a minimum guard interval; c is a speed of light;
a bandwidth, where the parameter is inversely proportional to distance resolution and may be obtained through c/2/delta_d, where delta_d is the distance resolution;
burst (burst duration), where the parameter is inversely proportional to velocity resolution, and the parameter is a time span of the sensing signal, and is mainly used for calculating the Doppler shift; and the parameter may be calculated through c/2/delta_v/fc, where delta_v is the velocity resolution; and fc is a carrier frequency of the signal; and
a time domain interval, where the parameter may be calculated through c/2/fc/v_range, where v_range is a maximum velocity minus a minimum velocity; the parameter is a time interval between two adjacent sensing signals; and fc is the carrier frequency of the signal.

In the embodiment of this application, the configuration information of the first signal is notified by the second device to the first device through broadcast signaling, an SIB, RRC signaling, a MAC CE, layer 1 signaling, a data channel, or the like. The target signal may be sent by one or more cells/TRPs.

In addition, the first target signal, the second target signal, or the third target signal may be the target signal.

When reporting the measurement quantity, the first device may also report index information of the target signal corresponding to the measurement quantity, for example, resource information of the target signal.

The communication sensing method according to this application will be described in detail below in specific embodiments.

### Embodiment 1-1:

A base station sends a sensing signal, a UE receives the sensing signal, and the UE detects a people flow condition or a traffic condition within a coverage range of the base station based on the sensing signal. For example, if a people flow condition in a first square area within a coverage range of the base station needs to be known, a UE in the first square area needs to be measure a sensing signal and sends a feedback quantity to the base station. A specific process is:

The UE receives a sensing requirement or a sensing category broadcast by the base station, where the sensing requirement or the sensing category is: people flow monitoring or traffic monitoring.

The UE receives broadcast signaling or another type of signaling sent by the base station, where the signaling indicates a preset condition, that is, a location of the UE satisfies a target area (a first square).

The UE first determines whether its own location is within the target area.

If the location is within the target area, the UE detects a target signal. The UE reports a measurement quantity of the target signal (associated with the people flow condition or the traffic condition) to a target device, such as the base station.

In addition, before detecting the target signal, the UE reads the signaling to obtain a time frequency resource and a signal format of the target signal, for example, information such as a sequence index (index) or a QCL relationship.

If the location is not within the target area, the UE does not detect the target signal.

### Embodiment 1-2:

A base station sends a sensing signal, a UE receives the sensing signal, and the UE detects a people flow condition or a traffic condition within a coverage range of the base station based on the sensing signal. For example, if a people flow condition in a first square area within a coverage range of the base station needs to be known, a UE in the first square area needs to be measure a sensing signal and sends a feedback quantity to the base station. A specific process is:

The UE receives a sensing requirement or a sensing category broadcast by the base station, where the sensing requirement or the sensing category is: people flow monitoring or traffic monitoring.

The UE receives broadcast signaling or another type of signaling sent by the base station, where the signaling indicates a preset condition, and the preset condition is that RSRP of a first target signal satisfies a preset threshold: -90 dBm. For example, the UE measures RSRP of the first target signal such as an SSB or another signal. Alternatively, the preset condition is that signal-to-clutter ratio of a second target signal satisfies a preset threshold: The signal-to-clutter ratio is greater than or equal to 20 dB. For example, the UE measures the signal-to-clutter ratio of the sensing signal.

The UE first determines whether the RSRP of the first target signal satisfies the preset threshold, or determines whether the signal-to-clutter ratio of the second target signal satisfies the preset threshold.

If the preset threshold is satisfied, the UE detects a target signal. The UE reports a measurement quantity of the target signal (associated with the people flow condition or the traffic condition) to a target device, such as the base station.

In addition, before detecting the target signal, the UE reads signaling sent by a network side to obtain a time frequency resource and a signal format of the target signal, for example, information such as a sequence index index and a QCL relationship.

If the preset threshold is not satisfied, the UE does not detect the target signal.

In the embodiment, the UE that satisfies the preset threshold (for example, the UE having good signal quality) detects the target signal and feeds back the measurement quantity, so that a measurement quantity having poor reliability can be eliminated, thereby improving overall sensing performance.

### Embodiment 2:

A base station sends a sensing signal, a UE receives the sensing signal, and the UE detects, depending on the sensing signal, whether humidity or a temperature or PM2.5 indicator within a coverage range of the base station exceeds a preset threshold. A specific process is:

The UE receives a sensing requirement or a sensing category broadcast by the base station, where the sensing requirement or the sensing category is: weather monitoring or PM2.5 monitoring.

The UE receives broadcast signaling or another type of signaling sent by the base station, where the signaling indicates a preset condition, and the preset condition is that the humidity or the temperature or the PM2.5 indicator satisfies a preset condition, for example, the temperature is greater than 40 degrees Celsius, or the PM2.5 indicator is greater than 200 micrograms per cubic meter, or the humidity is greater than 50%.

The UE first determines whether its own humidity or temperature or PM2.5 satisfies the preset condition. The humidity or the temperature or PM2.5 is determined by the UE by detecting a target signal (that is, the third target signal) sent by the base station, or obtained by the UE based on an installed sensor.

If the preset condition is satisfied, the UE reports a humidity or temperature or PM2.5 value to the base station. Reported information such as a time frequency resource is notified by the base station to the UE.

If the preset condition is not satisfied, the UE does not report the humidity or the temperature or PM2.5 to the base station.

Optionally, the UE that satisfies the preset condition reports location information of the UE to a target device such as the base station.

### Embodiment 3:

A base station sends a sensing signal, a UE receives the sensing signal, and the UE detects terrain reconstruction or reconstruction of a three-dimensional (3 Dimensions, 3D) building within a coverage range of the base station based on the sensing signal. For example, if reconstruction of a 3D buildings in a Times Square area within the coverage range of the base station needs to be completed, a UE in the Times Square area needs to be measure a sensing signal and sends a feedback quantity to the base station. A specific process is:

The UE receives a sensing requirement/sensing category broadcast by the base station: the terrain reconstruction or the reconstruction of the 3D building.

The UE receives broadcast signaling or another type of signaling sent by the base station, where the broadcast signaling indicates a preset condition, that is, a location of the UE satisfies a target area-Times Square.

The UE first determines whether its own location satisfies the target area. For example, the UE obtains its own location information by detecting a third target signal (such as a positioning reference signal).

If the target area is satisfied, the UE detects a target signal and reports a measurement quantity of the target signal to a target device such as the base station. Before detecting the target signal, the UE reads signaling sent by a network side to obtain a time frequency resource and a signal format of the target signal, for example, information such as a sequence index index and a QCL relationship.

If the target area is not satisfied, the UE does not detect the target signal.

### Embodiment 4:

A UE sends a sensing signal, and a base station receives the sensing signal used for detecting terrain reconstruction or reconstruction of a 3D building within a coverage range of the base station. For example, if reconstruction of a 3D building in a Times Square area within the coverage range of the base station needs to be completed, a UE in the Times Square area needs to send a sensing signal. A specific process is:

The UE receives a sensing requirement/sensing category broadcast by the base station: the terrain reconstruction or the reconstruction of the 3D building.

The UE receives broadcast signaling or another type of signaling sent by the base station, where the broadcast signaling indicates a preset condition, that is, a location of the UE satisfies a target area-Times Square.

The UE first determines whether its own location satisfies the target area. For example, the UE obtains its own location information by detecting a third target signal (such as a positioning reference signal).

If the target area is satisfied, the UE sends a target signal (such as the fourth signal) to the base station. Before sending the target signal, the UE reads signaling sent by a network side to obtain a time frequency resource and a signal format of the target signal, for example, information such as a sequence index index and a QCL relationship.

If the target area is not satisfied, the UE does not send the target signal.

The base station detects the target signal, and obtains a measurement quantity related to the reconstruction of the 3D building, thereby finally completing the reconstruction of the 3D building.

### Embodiment 5:

A base station needs to obtain a maximum movement velocity of a UE within a coverage area of the base station. The base station sends a sensing signal, and the UE receives the sensing signal, detects Doppler shift, and reports the Doppler shift to the base station. The base station determines a movement velocity of the UE based on Doppler shift information (which may be combined with angle information, or the like) reported by the UE. A specific process is:

The UE receives a sensing requirement/sensing category broadcast by the base station: traffic monitoring-vehicle speed monitoring.

The UE receives broadcast signaling or another type of signaling sent by the base station, where the broadcast signaling indicates a preset condition, that is, the Doppler shift is greater than 1 KHz or a ratio of the Doppler shift to a carrier frequency is greater than 0.000001.

The UE first determines whether its own Doppler shift satisfies a preset condition. For example, the UE obtains its own Doppler shift by detecting a fourth target signal.

If the preset condition is satisfied, the UE reports the Doppler shift obtained by detecting the fourth target signal to a target device such as the base station. Before detecting the fourth target signal, the UE reads signaling sent by a network side to obtain a time frequency resource and a signal format of the fourth target signal, for example, information such as a sequence index index and a QCL relationship.

If the preset condition is not satisfied, the UE does not report the Doppler shift to the base station.

### Embodiment 6:

A base station needs to obtain a maximum movement velocity of a UE in a particular subarea (Times Square) within a coverage area of the base station. The base station sends a sensing signal, and the UE receives the sensing signal, detects Doppler shift, and reports the Doppler shift to the base station. The base station determines a movement velocity of the UE based on Doppler shift information (which may be combined with angle information, or the like) reported by the UE. A specific process is:

The UE receives a sensing requirement/sensing category broadcast by the base station: traffic monitoring-vehicle speed monitoring.

The UE receives broadcast signaling or another type of signaling sent by the base station, where the broadcast signaling indicates a preset condition, that is, the Doppler shift is greater than 1 KHz or a ratio of the Doppler shift to a carrier frequency is greater than 0.000001, and a location of the UE satisfies a target area-Times Square.

The UE first determines whether the preset condition is satisfied. For example, the UE obtains its own Doppler shift by detecting a fourth target signal, obtains its own location information by detecting a third target signal, and then determines whether the preset condition is satisfied. The fourth target signal and the third target signal may be a same signal.

If the preset condition is satisfied, the UE reports the Doppler shift obtained by detecting the fourth target signal to a target device such as the base station. Before detecting the fourth target signal, the UE reads signaling sent by a network side to obtain a time frequency resource and a signal format of the fourth target signal, for example, information such as a sequence index index and a QCL relationship.

If the preset condition is not satisfied, the UE does not report the Doppler shift to the base station.

In the communication sensing method according to the embodiment of this application, a first device that satisfies a preset condition performs a first operation, to prevent a device that does not satisfy the preset condition from detecting a sensing signal or reporting a measurement quantity of the sensing signal, so that reliability or accuracy of the fed-back measurement quantity can be effectively ensured, thereby improving overall sensing performance.

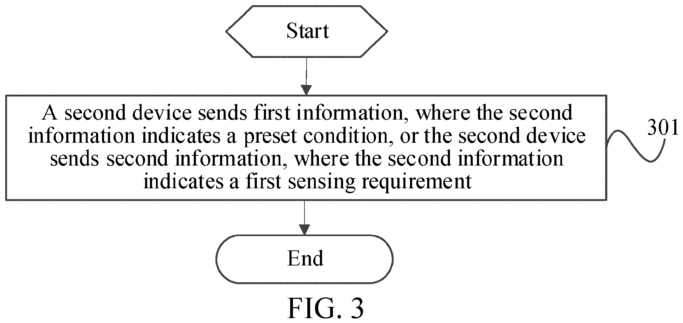

As shown in FIG. 3, an embodiment of this application provides a communication sensing method, including:
Step 301: A second device sends first information, where the first information indicates a preset condition; or the second device sends second information, where the second information indicates a first sensing requirement.

The first sensing requirement is associated with at least one of the following:
the preset condition;
a source or format of a sensing signal;
a measurement quantity or a reporting quantity; and
a resource used for reporting the measurement quantity.

The preset condition includes at least one of the following:
signal quality of a first target signal satisfies a first condition;
a first indicator corresponding to a second target signal satisfies a second condition, where the first indicator is an indicator related to quality of the sensing signal;
a sensing result associated with a third target signal satisfies a third condition, where the third target signal is a signal used for sensing; and
a sensing-related measurement quantity associated with a fourth target signal satisfies a fourth condition, where the fourth target signal is a signal used for sensing.

Optionally, the first information indicates the preset condition related to the first sensing requirement.

In the embodiment of this application, the first sensing requirement is a sensing requirement of the second device. Herein, the first sensing requirement may also be described as a first sensing purpose or a first sensing category.

The first information or the second information may be transmitted through broadcast signaling, a system information block (System Information Block, SIB), radio resource control (Radio Resource Control, RRC) signaling, a media access control control element (MAC CE), layer 1 signaling, or a data channel.

The first device may be specifically a base station, a UE, a sidelink (sidelink) device, a sensing server, a sensing network element of a core network, or the like. The second device may specifically be a base station, a UE, a sidelink (sidelink) device, a sensing server, a sensing network element of a core network, a computing unit similar to a location management function (Location Management Function, LMF), or the like.

In the communication sensing method according to the embodiment of this application, first information or second information is sent, where the first information indicates a preset condition, and the second information indicates a first sensing requirement, so that a first device that satisfies the preset condition performs a first operation, to prevent a device that does not satisfy the preset condition from detecting a sensing signal or reporting a measurement quantity of the sensing signal, so that reliability or accuracy of the fed-back measurement quantity can be effectively ensured, thereby improving overall sensing performance.

Optionally, the signal quality is indicated by at least one of the following:
reference signal received power RSRP;
signal to interference plus noise ratio SINR;
signal-to-noise ratio SNR;
C/I; and
reference signal received quality RSRQ.

Optionally, the first indicator includes at least one of the following:
a signal-to-clutter ratio;
sensing resolution or sensing resolution precision;
a signal side lobe characteristic; and
peak to average power ratio PAPR.

Optionally, the sensing result includes at least one of the following:
a location of a target object;
a distance of the target object;
a speed of the target object;
a detection result of the target object;
a tracking result of the target object;
a recognition result of the target object;
an imaging result of the target object;
humidity;
a temperature; and
air quality.

Optionally, the measurement quantity includes at least one of the following:
a first-type measurement quantity; and
a second-type measurement quantity.

The first-type measurement quantity includes at least one of the following:
a channel matrix H;
channel state information CSI;
power, a delay and/or angle information of each path in a multipath channel;
Doppler spread;
Doppler shift;
a phase difference between a first antenna and a second antenna; and
a delay difference between the first antenna and the second antenna.

The second-type measurement quantity includes at least one of the following:
feature information of a target object;
target event-related information; and
target environment-related information.

Optionally, the measurement quantity is a measurement quantity for each antenna or a measurement quantity for each sensing resource.

It should be noted that the first sensing requirement is the same as the first sensing requirement in the foregoing first device side method embodiment. Details are not described herein again.

Optionally, the method according to the embodiment of this application further includes:
sending configuration information of a first signal, where the first signal is a signal used for sensing.

The configuration information includes at least one of the following:
a waveform;
a signal parameter;
signal transmission power;
a signal format;
a signal direction;
a time resource;
a frequency resource;
a quasi-co-location QCL relationship; and
measurement quantity information.

Optionally, the signal parameter includes at least one of the following:
a subcarrier spacing;
a guard interval;
a guard interval;
burst burst duration; and
a time domain interval.

It should be noted that the configuration information of the first signal is the same as the configuration information of the first signal in the first device side method embodiment. Details are not described herein again.

In the communication sensing method according to the embodiment of this application, first information or second information is sent, where the first information indicates a preset condition, and the second information indicates a first sensing requirement, so that a first device that satisfies the preset condition triggers an operation related to the first sensing requirement, to prevent a device that does not satisfy the preset condition from detecting a sensing signal or reporting a measurement quantity of the sensing signal, so that reliability or accuracy of the fed-back measurement quantity can be effectively ensured, thereby improving overall sensing performance.

It should be noted that an execution subject for the communication sensing method provided in the embodiment of this application may be a communication sensing apparatus, or a control module in the communication sensing apparatus configured to execute the communication sensing method. In the embodiment of this application, taking the communication sensing method being executed by the communication sensing apparatus as an example, the communication sensing apparatus provided in the embodiment of this application is described.

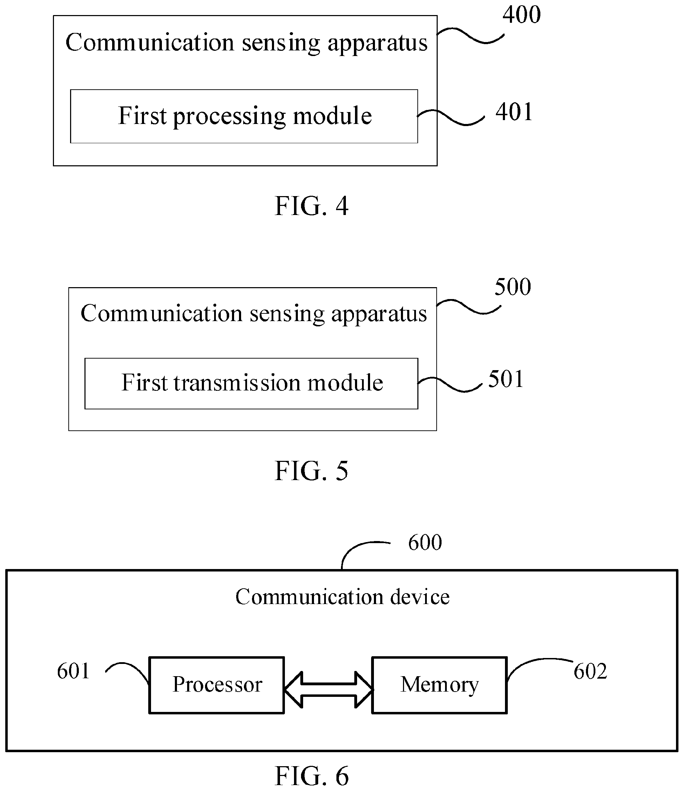

As shown in FIG. 4, an embodiment of this application provides a communication sensing apparatus 400, including:
a first processing module 401, configured to perform a first operation in a case that a preset condition is satisfied.

The first operation includes one of the following:
detecting a first signal;
sending a measurement quantity related to the first signal;
detecting the first signal and sending the measurement quantity related to the first signal; and
sending the first signal, where
the first signal is a signal used for sensing.

The preset condition includes at least one of the following:
signal quality of a first target signal satisfies a first condition;
a first indicator corresponding to a second target signal satisfies a second condition, where the first indicator is an indicator related to quality of a sensing signal;
a sensing result associated with a third target signal satisfies a third condition, where the third target signal is a signal used for sensing; and
a sensing-related measurement quantity associated with a fourth target signal satisfies a fourth condition, where the fourth target signal is a signal used for sensing.

Optionally, the apparatus according to the embodiment of this application further includes: an obtaining module, configured to obtain a first sensing requirement.

Optionally, the apparatus according to the embodiment of this application further includes:
a first determining module, configured to determine the preset condition through an agreement or by receiving first information sent by a second device, where
the first information indicates the preset condition.

Optionally, the apparatus according to the embodiment of this application further includes:
a first receiving module, configured to receive second information sent by the second device, where the second information indicates the first sensing requirement.

The first sensing requirement is associated with at least one of the following:
the preset condition;
a source or format of the sensing signal;
the measurement quantity or a reporting quantity; and
a resource used for reporting the measurement quantity.

Optionally, the signal quality is indicated by at least one of the following:
reference signal received power RSRP;
signal to interference plus noise ratio SINR;
signal-to-noise ratio SNR;
C/I; and
reference signal received quality RSRQ.

Optionally, the first indicator includes at least one of the following:
a signal-to-clutter ratio;
sensing resolution or sensing resolution precision;
a signal side lobe characteristic; and
peak to average power ratio PAPR.

Optionally, the sensing result includes at least one of the following:
a location of a target object;
a distance of the target object;
a speed of the target object;
a detection result of the target object;
a tracking result of the target object;
a recognition result of the target object;
an imaging result of the target object;
humidity;
a temperature; and
air quality.

Optionally, the measurement quantity includes at least one of the following:
a first-type measurement quantity; and
a second-type measurement quantity.

The first-type measurement quantity includes at least one of the following:
a channel matrix H;
channel state information CSI;
power, a delay and/or angle information of each path in a multipath channel;
Doppler spread;
Doppler shift;
a phase difference between a first antenna and a second antenna; and
a delay difference between the first antenna and the second antenna.

The second-type measurement quantity includes at least one of the following:
feature information of a target object;
target event-related information; and
target environment-related information.

Optionally, the measurement quantity is a measurement quantity for each antenna or a measurement quantity for each sensing resource.

Optionally, the first operation further includes:
reporting measurement information related to the preset condition.

Optionally, the method according to the embodiment of this application further includes:
a first obtaining module, configured to obtain configuration information of the first signal; and
the first processing module, configured to perform the first operation based on the configuration information of the first signal.

The configuration information includes at least one of the following:
a waveform;
a signal parameter;
signal transmission power;
a signal format;
a signal direction;
a time resource;
a frequency resource;
a quasi-co-location QCL relationship; and
measurement quantity information.

Optionally, the signal parameter includes at least one of the following:
a subcarrier spacing;
a guard interval;
a bandwidth;
burst burst duration; and
a time domain interval.

In the communication sensing method according to the embodiment of this application, a first device that satisfies a preset condition performs a first operation, to prevent a device that does not satisfy the preset condition from detecting a sensing signal or reporting a measurement quantity of the sensing signal, so that reliability or accuracy of the fed-back measurement quantity can be effectively ensured, thereby improving overall sensing performance.

The communication sensing apparatus in the embodiment of this application may be an apparatus, an apparatus having an operating system, or an electronic device, or may be a component, an integrated circuit, or a chip in a terminal. The apparatus or the electronic device may be a mobile terminal or may be a non-mobile terminal device. For example, the mobile terminal may include but is not limited to the type of terminal 11 listed above, and the non-mobile terminals may be a server, a network attached storage (Network Attached Storage, NAS), a personal computer (personal computer, PC), a television (television, TV), a teller machine, a self-service machine, or the like, which are not specifically limited in the embodiment of this application.

The apparatus provided in the embodiment of this application can implement processes implemented in the method embodiments in FIG. 2 and achieves a same technical effect. To avoid repetition, details are not described herein again.

As shown in FIG. 5, an embodiment of this application provides a communication sensing apparatus 500, including:
a first transmission module 501, configured to send first information or send second information, where the first information indicates a preset condition, and the second information indicates a first sensing requirement.

The first sensing requirement is associated with at least one of the following:
the preset condition;
a source or format of a sensing signal;
a measurement quantity or a reporting quantity; and
a resource used for reporting the measurement quantity.

The preset condition includes at least one of the following:
signal quality of a first target signal satisfies a first condition;
a first indicator corresponding to a second target signal satisfies a second condition, where the first indicator is an indicator related to quality of the sensing signal;
a sensing result associated with a third target signal satisfies a third condition, where the third target signal is a signal used for sensing; and
a sensing-related measurement quantity associated with a fourth target signal satisfies a fourth condition, where the fourth target signal is a signal used for sensing.

Optionally, the apparatus according to the embodiment of this application further includes:
a determining module, configured to determine the first information or the second information.

Optionally, the signal quality is indicated by at least one of the following:
reference signal received power RSRP;
signal to interference plus noise ratio SINR;
signal-to-noise ratio SNR;
C/I; and
reference signal received quality RSRQ.

Optionally, the first indicator includes at least one of the following:
a signal-to-clutter ratio;
sensing resolution or sensing resolution precision;
a signal side lobe characteristic; and
peak to average power ratio PAPR.

Optionally, the sensing result includes at least one of the following:
a location of a target object;
a distance of the target object;
a speed of the target object;
a detection result of the target object;
a tracking result of the target object;
a recognition result of the target object;
an imaging result of the target object;
humidity;
a temperature; and
air quality.

Optionally, the measurement quantity includes at least one of the following:
a first-type measurement quantity; and
a second-type measurement quantity.

The first-type measurement quantity includes at least one of the following:
a channel matrix H;
channel state information CSI;
power, a delay and/or angle information of each path in a multipath channel;
Doppler spread;
Doppler shift;
a phase difference between a first antenna and a second antenna; and
a delay difference between the first antenna and the second antenna.

The second-type measurement quantity includes at least one of the following:
feature information of a target object;
target event-related information; and
target environment-related information.

Optionally, the measurement quantity is a measurement quantity for each antenna or a measurement quantity for each sensing resource.

Optionally, the apparatus according to the embodiment of this application further includes:
a second transmission module, configured to send configuration information of a first signal, where the first signal is a signal used for sensing.

The configuration information includes at least one of the following:
a waveform;
a signal parameter;
signal transmission power;
a signal format;
a signal direction;
a time resource;
a frequency resource;
a quasi-co-location QCL relationship; and
measurement quantity information.

Optionally, the signal parameter includes at least one of the following:
a subcarrier spacing;
a guard interval;
a guard interval;
burst burst duration; and
a time domain interval.

In the embodiment of this application, first information or second information is sent, where the first information indicates a preset condition, and the second information indicates a first sensing requirement, so that a first device that satisfies the preset condition performs a first operation, to prevent a device that does not satisfy the preset condition from detecting a sensing signal or reporting a measurement quantity of the sensing signal, so that reliability or accuracy of the fed-back measurement quantity can be effectively ensured, thereby improving overall sensing performance.

The communication sensing apparatus in the embodiment of this application may be an apparatus, an apparatus having an operating system, or an electronic device, or may be a component, an integrated circuit, or a chip in a terminal. The apparatus or the electronic device may be a mobile terminal or may be a non-mobile terminal device. For example, the mobile terminal may include but is not limited to the type of terminal 11 listed above, and the non-mobile terminals may be a server, a network attached storage (Network Attached Storage, NAS), a personal computer (personal computer, PC), a television (television, TV), a teller machine, a self-service machine, or the like, which are not specifically limited in the embodiment of this application.

The apparatus provided in the embodiment of this application can implement processes implemented in the method embodiments in FIG. 3 and achieves a same technical effect. To avoid repetition, details are not described herein again.

Optionally, as shown in FIG. 6, an embodiment of this application further provides a communication device 600, including a processor 601, a memory 602, and a program or instructions stored on the memory 602 and capable of running on the processor 601. For example, when the communication device 600 is a terminal, when the program or the instructions are executed by the processor 601, processes of the foregoing communication sensing method embodiments applied to a first device or a second device are implemented, and a same technical effect can be achieved. To avoid repetition, details are not described herein again.

An embodiment of this application further provides a network device (the network device is specifically a first device), including a processor and a communication interface. The processor is configured to: A first device performs a first operation in a case that a preset condition is satisfied.

The first operation includes one of the following:
detecting a first signal;
sending a measurement quantity related to the first signal;
detecting the first signal and sending the measurement quantity related to the first signal; and
sending the first signal, where
the first signal is a signal used for sensing.

The preset condition includes at least one of the following:
signal quality of a first target signal satisfies a first condition;
a first indicator corresponding to a second target signal satisfies a second condition, where the first indicator is an indicator related to quality of a sensing signal;
a sensing result associated with a third target signal satisfies a third condition, where the third target signal is a signal used for sensing; and
a sensing-related measurement quantity associated with a fourth target signal satisfies a fourth condition, where the fourth target signal is a signal used for sensing.

An embodiment of this application further provides a network device (the network device is specifically a second device), including a processor and a communication interface. The processor is configured to: send first information or send second information, where the first information indicates a preset condition. A first sensing requirement is associated with at least one of the following:
the preset condition;
a source or format of a sensing signal;
a measurement quantity or a reporting quantity; and
a resource used for reporting the measurement quantity.

The preset condition includes at least one of the following:
signal quality of a first target signal satisfies a first condition;
a first indicator corresponding to a second target signal satisfies a second condition, where the first indicator is an indicator related to quality of a sensing signal;
a sensing result associated with a third target signal satisfies a third condition, where the third target signal is a signal used for sensing; and
a sensing-related measurement quantity associated with a fourth target signal satisfies a fourth condition, where the fourth target signal is a signal used for sensing.

The network device embodiment corresponds to the foregoing first device side method embodiment or the second side method embodiment. Implementation processes and implementation modes of the foregoing method embodiments may be applied to the network device embodiment, and can achieve a same technical effect.

It should be noted that the network device in the embodiment of this application may include a terminal or a network side device.

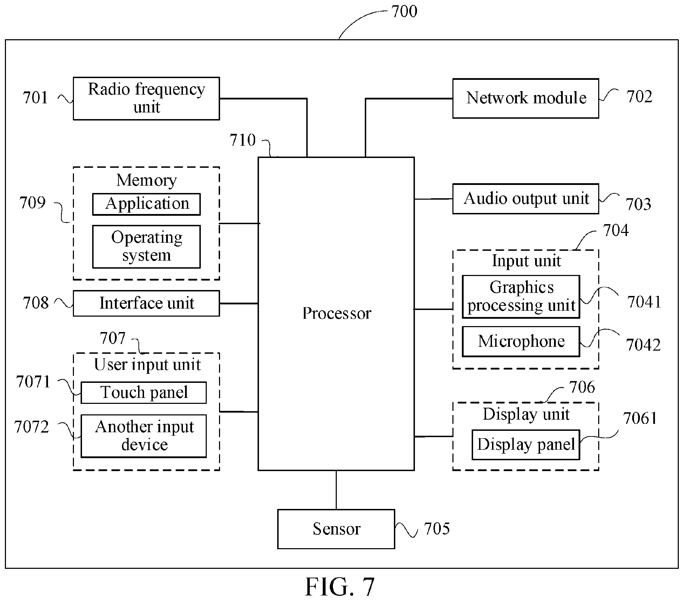

The first device and the second device may specifically be terminals. FIG. 7 is a schematic diagram of a hardware structure of a terminal device for implementing an embodiment of this application. The terminal 700 includes but is not limited to: at least some of a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (such as a battery) for supplying power to components, and the power supply may be logically connected to the processor 710 through a power management system, thereby implementing functions such as charging, discharging, and power consumption management through the power management system. The terminal structure shown in FIG. 7 does not constitute a limitation on the terminal. The terminal may include more or fewer components than those shown in the figure, or some components may be combined, or a different component arrangement may be used. Details are not described herein again.

It should be understood that in the embodiment of this application, the input unit 704 may include a graphics processing unit (Graphics Processing Unit, GPU) 7041 and a microphone 7042. The graphics processing unit 7041 performs processing on image data of a static picture or a video that is obtained by an image capture apparatus (such as a camera) in a video capture mode or an image capture mode. The display unit 706 may include a display panel 7061. The display panel 7061 may be configured in the form of a liquid crystal display, an organic light-emitting diode, or the like. The user input unit 707 includes a touch panel 7071 and another input device 7072. The touch panel 7071 is also called a touch screen. The touch panel 7071 may include two parts: a touch detection apparatus and a touch controller. The another input device 7072 may include but not limited to a physical keyboard, a functional key (for example, a volume control key or a switch key), a track ball, a mouse, and a joystick. Details are not described herein again.

In the embodiment of this application, after the radio frequency unit 701 receives downlink data from a network side device, the downlink data is sent to the processor 710 for processing. In addition, uplink data is sent to the network side device. Generally, the radio frequency unit 701 includes but is not limited to an antenna, at least one amplifier, a transceiver, a coupler, a low noise amplifier, a duplexer, and the like.

The memory 709 is configured to store a software program or instructions and various data. The memory 709 may mainly include a storage program or instruction storage area and a data storage area. The program or instruction storage area may store an operating system, an application required by at least one function (for example, a sound playback function and an image display function), and the like. In addition, the memory 709 may include a high-speed random access memory, and may also include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one magnetic disk storage device, a flash memory device, or another non-volatile solid-state storage device.

The processor 710 may include one or more processing units. Optionally, the processor 710 may integrate an application processor and a modem processor, where the application processor mainly processes an operating system, a user interface, an application or instructions, and the like, and the modem processor mainly processes wireless communication, such as a baseband processor. It may be understood that alternatively, the modem processor may not be integrated into the processor 710.

In one embodiment, the terminal is specifically a first device. In the embodiment, the processor 710 is configured to perform a first operation in a case that a preset condition is satisfied.

The first operation includes one of the following:
detecting a first signal;
sending a measurement quantity related to the first signal;
detecting the first signal and sending the measurement quantity related to the first signal; and
sending the first signal, where
the first signal is a signal used for sensing.

The preset condition includes at least one of the following:
signal quality of a first target signal satisfies a first condition;
a first indicator corresponding to a second target signal satisfies a second condition, where the first indicator is an indicator related to quality of a sensing signal;
a sensing result associated with a third target signal satisfies a third condition, where the third target signal is a signal used for sensing; and
a sensing-related measurement quantity associated with a fourth target signal satisfies a fourth condition, where the fourth target signal is a signal used for sensing.

Optionally, the processor 710 is further configured to:
determine the preset condition through an agreement or by receiving first information sent by a second device, where
the first information indicates the preset condition.

Optionally, the radio frequency unit 701 is further configured to receive second information sent by the second device, where the second information indicates a first sensing requirement.

The first sensing requirement is associated with at least one of the following:
the preset condition;
a source or format of the sensing signal;
a measurement quantity or a reporting quantity; and
a resource used for reporting the measurement quantity.

Optionally, the signal quality is indicated by at least one of the following:
reference signal received power RSRP;
signal to interference plus noise ratio SINR;
signal-to-noise ratio SNR;
C/I; and
reference signal received quality RSRQ.

Optionally, the first indicator includes at least one of the following:
a signal-to-clutter ratio;
sensing resolution or sensing resolution precision;
a signal side lobe characteristic; and
peak to average power ratio PAPR.

Optionally, the sensing result includes at least one of the following:
a location of a target object;
a distance of the target object;
a speed of the target object;
a detection result of the target object;
a tracking result of the target object;
a recognition result of the target object;
an imaging result of the target object;
humidity;
a temperature; and
air quality.

Optionally, the measurement quantity includes at least one of the following:
a first-type measurement quantity; and
a second-type measurement quantity.

The first-type measurement quantity includes at least one of the following:
a channel matrix H;
channel state information CSI;
power, a delay and/or angle information of each path in a multipath channel;
Doppler spread;
Doppler shift;
a phase difference between a first antenna and a second antenna; and
a delay difference between the first antenna and the second antenna.

The second-type measurement quantity includes at least one of the following:
feature information of a target object;
target event-related information; and
target environment-related information.

Optionally, the measurement quantity is a measurement quantity for each antenna or a measurement quantity for each sensing resource.

Optionally, the first operation further includes:
reporting measurement information related to the preset condition.

Optionally, the radio frequency unit 701 is further configured to:
obtain configuration information of the first signal.

The processor 710 configured to perform the first operation based on the configuration information of the first signal.

The configuration information includes at least one of the following:
a waveform;
a signal parameter;
signal transmission power;
a signal format;
a signal direction;
a time resource;
a frequency resource;
a quasi-co-location QCL relationship; and
measurement quantity information.

Optionally, the signal parameter includes at least one of the following:
a subcarrier spacing;
a guard interval;
a bandwidth;
burst burst duration; and
a time domain interval.

In another embodiment, the terminal is specifically a second device. In the embodiment, the radio frequency unit 701 is configured to send first information or send second information, where the first information indicates a preset condition, and the second information indicates a first sensing requirement.

The first sensing requirement is associated with at least one of the following:
the preset condition;
a source or format of a sensing signal;
a measurement quantity or a reporting quantity; and
a resource used for reporting the measurement quantity.

The preset condition includes at least one of the following:
signal quality of a first target signal satisfies a first condition;
a first indicator corresponding to a second target signal satisfies a second condition, where the first indicator is an indicator related to quality of the sensing signal;
a sensing result associated with a third target signal satisfies a third condition, where the third target signal is a signal used for sensing; and
a sensing-related measurement quantity associated with a fourth target signal satisfies a fourth condition, where the fourth target signal is a signal used for sensing.

Optionally, the signal quality is indicated by at least one of the following:
reference signal received power RSRP;
signal to interference plus noise ratio SINR;
signal-to-noise ratio SNR;
C/I; and
reference signal received quality RSRQ.

Optionally, the first indicator includes at least one of the following:
a signal-to-clutter ratio;
sensing resolution or sensing resolution precision;
a signal side lobe characteristic; and
peak to average power ratio PAPR.

Optionally, the sensing result includes at least one of the following:
a location of a target object;
a distance of the target object;
a speed of the target object;
a detection result of the target object;
a tracking result of the target object;
a recognition result of the target object;
an imaging result of the target object;
humidity;
a temperature; and
air quality.

Optionally, the measurement quantity includes at least one of the following:
a first-type measurement quantity; and
a second-type measurement quantity.

The first-type measurement quantity includes at least one of the following:
a channel matrix H;
channel state information CSI;
power, a delay and/or angle information of each path in a multipath channel;
Doppler spread;
Doppler shift;
a phase difference between a first antenna and a second antenna; and
a delay difference between the first antenna and the second antenna.

The second-type measurement quantity includes at least one of the following:
feature information of a target object;
target event-related information; and
target environment-related information.

Optionally, the measurement quantity is a measurement quantity for each antenna or a measurement quantity for each sensing resource.

Optionally, the radio frequency unit 701 is further configured to:
obtain configuration information of a first signal.

The configuration information includes at least one of the following:
a waveform;
a signal parameter;
signal transmission power;
a signal format;
a signal direction;
a time resource;
a frequency resource;
a quasi-co-location QCL relationship; and
measurement quantity information.

Optionally, the signal parameter includes at least one of the following:
a subcarrier spacing;
a guard interval;
a guard interval;
burst burst duration; and
a time domain interval.

In embodiments of this application, a first device that satisfies a preset condition performs a first operation, to prevent a device that does not satisfy the preset condition from detecting a sensing signal or reporting a measurement quantity of the sensing signal, so that reliability or accuracy of the fed-back measurement quantity can be effectively ensured, thereby improving overall sensing performance.

An embodiment of this application further provides a network side device. The network side device may be the first device or the second device. The network side device includes a processor and a communication interface. When the network side device is the first device, the processor is configured to perform a first operation in a case that a preset condition is satisfied.

The first operation includes one of the following:
detecting a first signal;
sending a measurement quantity related to the first signal;
detecting the first signal and sending the measurement quantity related to the first signal; and
sending the first signal, where
the first signal is a signal used for sensing.

The preset condition includes at least one of the following:
signal quality of a first target signal satisfies a first condition;
a first indicator corresponding to a second target signal satisfies a second condition, where the first indicator is an indicator related to quality of a sensing signal;
a sensing result associated with a third target signal satisfies a third condition, where the third target signal is a signal used for sensing; and
a sensing-related measurement quantity associated with a fourth target signal satisfies a fourth condition, where the fourth target signal is a signal used for sensing.

When the network side device is the second device, the communication interface is configured to send first information or second information, where the first information indicates a preset condition, and the second information indicates a first sensing requirement.

The first sensing requirement is associated with at least one of the following:
the preset condition;
a source or format of a sensing signal;
a measurement quantity or a reporting quantity; and
a resource used for reporting the measurement quantity.

The preset condition includes at least one of the following:
signal quality of a first target signal satisfies a first condition;
a first indicator corresponding to a second target signal satisfies a second condition, where the first indicator is an indicator related to quality of the sensing signal;
a sensing result associated with a third target signal satisfies a third condition, where the third target signal is a signal used for sensing; and
a sensing-related measurement quantity associated with a fourth target signal satisfies a fourth condition, where the fourth target signal is a signal used for sensing.

The network side device embodiment corresponds to the foregoing first device or second device method embodiment. Implementation processes and implementation modes of the foregoing method embodiments may be applied to the network device embodiment, and can achieve a same technical effect.

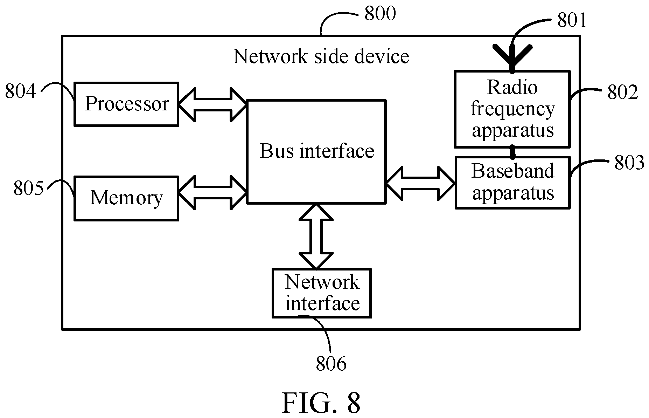

Specifically, an embodiment of this application further provides a network side device. Optionally, the network side device is the first device or the second device. As shown in FIG. 8, the network side device 800 includes: an antenna 801, a radio frequency apparatus 802, and a baseband apparatus 803. The antenna 801 is connected to the radio frequency apparatus 802. In an uplink direction, the radio frequency apparatus 802 receives information through the antenna 801, and sends the received information to the baseband apparatus 803 for processing. In a downlink direction, the baseband apparatus 803 processes information to be sent and sends same to the radio frequency apparatus 802, and the radio frequency apparatus 802 processes the received information and then sends same through the antenna 801.

The band processing apparatus may be located in the baseband apparatus 803. The method executed by the network side device in the foregoing embodiment may be implemented in the baseband apparatus 803. The baseband apparatus 803 includes a processor 804 and a memory 805.

The baseband apparatus 803 may include, for example, at least one baseband board. The baseband board is provided with a plurality of chips. As shown in FIG. 8, one of the chips is, for example, the processor 804, which is connected to the memory 805, to invoke a program in the memory 805, so as to perform an operation of the first device or the second device shown in the foregoing method embodiment.

The baseband apparatus 803 may further include a network interface 806, configured to exchange information with the radio frequency apparatus 802. The interface is, for example, a common public radio interface (common public radio interface, CPRI).

Specifically, the network side device according to the embodiment of the present disclosure further includes: instructions or a program stored on the memory 805 and capable of running on the processor 804, the processor 804. The processor 804 invokes the instructions or the program in the memory 805 to execute the method executed by modules shown in FIG. 4 or FIG. 5, and achieve a same technical effect. To avoid repetition, details are not described again.

An embodiment of this application further provide a readable storage medium. The readable storage medium stores a program or instructions, where the program or the instructions are executed by a processor, processes of the foregoing communication sensing method embodiments, and a same technical effect can be achieved. To avoid repetition, details are not described again.

The processor is the processor in the terminal in the foregoing embodiments. The readable storage medium includes a computer-readable storage medium, such as a computer read-only memory (Read-Only Memory, ROM), a random access memory (Random Access Memory, RAM), a magnetic disk, or an optical disk.

An embodiment of this application further provides a chip. The chip includes a processor and a communication interface. The communication interface is coupled to the processor. The processor is configured to run a program or instructions to implement processes of the foregoing communication sensing method embodiments, and can achieve a same technical effect. To avoid repetition, details are not described again.

It should be understood that the chip mentioned in the embodiment of this application may also be called a system on chip, a system-on-chip, a system-on-a-chip, or a system on a chip.

It should be noted that the terms "include", "contain", or any other variation thereof in this specification is intended to cover a non-exclusive inclusion, so that a process, method, article or apparatus including a series of elements includes not only those elements but also other elements that are not expressly listed, or elements inherent to such process, method, article or apparatus. Without more limitations, elements defined by the sentence "including one" does not exclude that there are also other same elements in a process, method, article or apparatus including the element. Furthermore, it should be noted that the scopes of the methods and apparatuses in the implementations of this application are not limited to performing functions in the order shown or discussed, and may also include performing functions in a substantially simultaneous manner or in reverse order based on the functions involved, for example, the described methods may be performed in an order different from that described, and various steps may also be added, omitted, or combined. In addition, features described in some examples may be combined in other examples.

According to the descriptions in the foregoing implementations, a person skilled in the art may clearly learn that the methods according to the foregoing embodiments may be implemented by using software and a necessary general-purpose hardware platform, or, of course, by using hardware, but in many cases, the former is a better implementation. Based on such an understanding, the technical solutions of this application essentially, or the part contributing to conventional technologies, may be presented in the form of a computer software product. The computer software product is stored in a storage medium (for example, an ROM/RAM, a magnetic disk, or an optical disc) including several instructions to enable a terminal (which may be a mobile phone, a computer, a server, a network device, or the like) to perform the methods described in embodiments of this application.

Embodiments of this application are described above with reference to the accompanying drawings, but this application is not limited to the specific foregoing implementations. The foregoing specific implementations are merely exemplary and not limitative. A person of ordinary skill in the art may make various variations under the teaching of this application without departing from the spirit of the this application and the scope of protection of the claims, and such variations shall all fall within the scope of protection of this application.

## Claims

1. A communication sensing method, comprising:
performing, by a first device, a first operation in a case that a preset condition is satisfied, wherein
the first operation comprises one of the following:
detecting a first signal;
sending a measurement quantity related to the first signal;
detecting the first signal and sending the measurement quantity related to the first signal; and
sending the first signal, wherein
the first signal is a signal used for sensing; and
the preset condition comprises at least one of the following:
signal quality of a first target signal satisfies a first condition;
a first indicator corresponding to a second target signal satisfies a second condition, wherein the first indicator is an indicator related to quality of a sensing signal;
a sensing result associated with a third target signal satisfies a third condition, wherein the third target signal is a signal used for sensing; and
a sensing-related measurement quantity associated with a fourth target signal satisfies a fourth condition, wherein the fourth target signal is a signal used for sensing.

2. The method according to claim 1, further comprising:
determining the preset condition through an agreement or by receiving first information sent by a second device, wherein
the first information indicates the preset condition.

3. The method according to claim 1, further comprising:
receiving second information sent by the second device, wherein the second information indicates a first sensing requirement, and
the first sensing requirement is associated with at least one of the following:
the preset condition;
a source or format of the sensing signal;
the measurement quantity or a reporting quantity; and
a resource used for reporting the measurement quantity.

4. The method according to claim 1, wherein the signal quality is indicated by at least one of the following:
reference signal received power RSRP;
signal to interference plus noise ratio SINR;
signal-to-noise ratio SNR;
a ratio of carrier signal strength to interference signal strength C/I; and
reference signal received quality RSRQ.

5. The method according to claim 1, wherein the first indicator comprises at least one of the following:
a signal-to-clutter ratio;
sensing resolution or sensing resolution precision;
a signal side lobe characteristic; and
peak to average power ratio PAPR.

6. The method according to claim 1, wherein the sensing result comprises at least one of the following:
a location of a target object;
a distance of the target object;
a speed of the target object;
a detection result of the target object;
a tracking result of the target object;
a recognition result of the target object;
an imaging result of the target object;
humidity;
a temperature; and
air quality.

7. The method according to claim 1, wherein the measurement quantity comprises at least one of the following:
a first-type measurement quantity; and
a second-type measurement quantity, wherein
the first-type measurement quantity comprises at least one of the following:
a channel matrix H;
channel state information CSI;
power, a delay and/or angle information of each path in a multipath channel;
Doppler spread;
Doppler shift;
a phase difference between a first antenna and a second antenna; and
a delay difference between the first antenna and the second antenna; and
the second-type measurement quantity comprises at least one of the following:
feature information of a target object;
target event-related information; and
target environment-related information.

8. The method according to claim 1, wherein the measurement quantity is a measurement quantity for each antenna or a measurement quantity for each sensing resource.

9. The method according to claim 1, wherein the first operation further comprises:
reporting measurement information related to the preset condition.

10. The method according to claim 1, further comprising:
obtaining configuration information of the first signal, wherein
the performing, by a first device, a first operation comprises:
performing, by the first device, the first operation based on the configuration information of the first signal, wherein
the configuration information comprises at least one of the following:
a waveform;
a signal parameter;
signal transmission power;
a signal format;
a signal direction;
a time resource;
a frequency resource;
a quasi-co-location QCL relationship; and
measurement quantity information.

11. The method according to claim 10, wherein the signal parameter comprises at least one of the following:
a subcarrier spacing;
a guard interval;
a bandwidth;
burst burst duration; and
a time domain interval.

12. A communication sensing method, comprising:
sending, by a second device, first information, wherein the first information indicates a preset condition; or
sending, by the second device, second information, wherein the second information indicates a first sensing requirement, wherein
the first sensing requirement is associated with at least one of the following:
the preset condition;
a source or format of a sensing signal;
a measurement quantity or a reporting quantity; and
a resource used for reporting the measurement quantity; and
the preset condition comprises at least one of the following:
signal quality of a first target signal satisfies a first condition;
a first indicator corresponding to a second target signal satisfies a second condition, wherein the first indicator is an indicator related to quality of the sensing signal;
a sensing result associated with a third target signal satisfies a third condition, wherein the third target signal is a signal used for sensing; and
a sensing-related measurement quantity associated with a fourth target signal satisfies a fourth condition, wherein the fourth target signal is a signal used for sensing.

13. The method according to claim 12, wherein the signal quality is indicated by at least one of the following:
reference signal received power RSRP;
signal to interference plus noise ratio SINR;
signal-to-noise ratio SNR;
C/I; and
reference signal received quality RSRQ.

14. The method according to claim 12, wherein the first indicator comprises at least one of the following:
a signal-to-clutter ratio;
sensing resolution or sensing resolution precision;
a signal side lobe characteristic; and
peak to average power ratio PAPR.

15. The method according to claim 12, wherein the sensing result comprises at least one of the following:
a location of a target object;
a distance of the target object;
a speed of the target object;
a detection result of the target object;
a tracking result of the target object;
a recognition result of the target object;
an imaging result of the target object;
humidity;
a temperature; and
air quality.

16. The method according to claim 12, wherein the measurement quantity comprises at least one of the following:
a first-type measurement quantity; and
a second-type measurement quantity, wherein
the first-type measurement quantity comprises at least one of the following:
a channel matrix H;
channel state information CSI;
power, a delay and/or angle information of each path in a multipath channel;
Doppler spread;
Doppler shift;
a phase difference between a first antenna and a second antenna; and
a delay difference between the first antenna and the second antenna; and
the second-type measurement quantity comprises at least one of the following:
feature information of a target object;
target event-related information; and
target environment-related information.

17. The method according to claim 12, wherein the measurement quantity is a measurement quantity for each antenna or a measurement quantity for each sensing resource.

18. The method according to claim 12, further comprising:
sending configuration information of a first signal, wherein the first signal is a signal used for sensing; and
the configuration information comprises at least one of the following:
a waveform;
a signal parameter;
signal transmission power;
a signal format;
a signal direction;
a time resource;
a frequency resource;
a quasi-co-location QCL relationship; and
measurement quantity information.

19. The method according to claim 18, wherein the signal parameter comprises at least one of the following:
a subcarrier spacing;
a guard interval;
a guard interval;
burst burst duration; and
a time domain interval.

20. A communication sensing apparatus, comprising:
a first processing module, configured to perform a first operation in a case that a preset condition is satisfied, wherein
the first operation comprises one of the following:
detecting a first signal;
sending a measurement quantity related to the first signal;
detecting the first signal and sending the measurement quantity related to the first signal;
and
sending the first signal, wherein
the first signal is a signal used for sensing; and
the preset condition comprises at least one of the following:
signal quality of a first target signal satisfies a first condition;
a first indicator corresponding to a second target signal satisfies a second condition, wherein the first indicator is an indicator related to quality of a sensing signal;
a sensing result associated with a third target signal satisfies a third condition, wherein the third target signal is a signal used for sensing; and
a sensing-related measurement quantity associated with a fourth target signal satisfies a fourth condition, wherein the fourth target signal is a signal used for sensing.

21. The apparatus according to claim 20, further comprising:
a first determining module, configured to determine the preset condition through an agreement or by receiving first information sent by a second device, wherein
the first information indicates the preset condition.

22. The apparatus according to claim 20, further comprising:
a first receiving module, configured to receive second information sent by the second device, wherein the second information indicates a first sensing requirement, and
the first sensing requirement is associated with at least one of the following:
the preset condition;
a source or format of the sensing signal;
the measurement quantity or a reporting quantity; and
a resource used for reporting the measurement quantity.

23. A communication sensing apparatus, comprising:
a first transmission module, configured to send first information, wherein the first information indicates a preset condition, or
the first transmission module, configured to send second information, wherein the second information indicates a first sensing requirement,
the first sensing requirement is associated with at least one of the following:
the preset condition;
a source or format of a sensing signal;
a measurement quantity or a reporting quantity; and
a resource used for reporting the measurement quantity; and
the preset condition comprises at least one of the following:
signal quality of a first target signal satisfies a first condition;
a first indicator corresponding to a second target signal satisfies a second condition, wherein the first indicator is an indicator related to quality of the sensing signal;
a sensing result associated with a third target signal satisfies a third condition, wherein the third target signal is a signal used for sensing; and
a sensing-related measurement quantity associated with a fourth target signal satisfies a fourth condition, wherein the fourth target signal is a signal used for sensing.

24. The apparatus according to claim 23, wherein the signal quality is indicated by at least one of the following:
reference signal received power RSRP;
signal to interference plus noise ratio SINR;
signal-to-noise ratio SNR;
C/I; and
reference signal received quality RSRQ.

25. The apparatus according to claim 23, wherein the first indicator comprises at least one of the following:
a signal-to-clutter ratio;
sensing resolution or sensing resolution precision;
a signal side lobe characteristic; and
peak to average power ratio PAPR.

26. The apparatus according to claim 23, wherein the sensing result comprises at least one of the following:
a location of a target object;
a distance of the target object;
a speed of the target object;
a detection result of the target object;
a tracking result of the target object;
a recognition result of the target object;
an imaging result of the target object;
humidity;
a temperature; and
air quality.

27. A network device, comprising a processor, a memory, and a program or instructions stored on the memory and capable of running on the processor, wherein when the program or the instructions are executed by the processor, the steps of the communication sensing method according to any one of claims 1 to 11 are implemented, or the steps of the communication sensing method according to any one of claims 12 to 19 are implemented.
